(19) Europäisches Patentamt

European Patent Office

Office européen des brevets

(11) Veröffentlichungsnummer: **0 319 936 B1**

(12) **EUROPÄISCHE PATENTSCHRIFT**

(45) Veröffentlichungstag der Patentschrift: **11.03.92**

(21) Anmeldenummer: **88120398.8**

(22) Anmeldetag: **07.12.88**

(51) Int. Cl.⁵: **C02F 1/48**

(54) **Anlage zur Verhinderung von Kalkablagerungen in Rohrleitungssystemen.**

(30) Priorität: **09.12.87 DE 3741696**
**02.03.88 DE 3806708**

(43) Veröffentlichungstag der Anmeldung:
**14.06.89 Patentblatt 89/24**

(45) Bekanntmachung des Hinweises auf die
Patenterteilung:
**11.03.92 Patentblatt 92/11**

(84) Benannte Vertragsstaaten:
**AT BE CH DE ES FR GB GR IT LI LU NL SE**

(56) Entgegenhaltungen:
**WO-A-81/02529      WO-A-89/03808**
**BE-A- 901 884       DE-A- 1 944 763**
**US-A- 4 210 535     US-A- 4 265 746**
**US-A- 4 605 498**

(73) Patentinhaber: **Schubert, Christoph**
**Durschstrasse 37**
**W-7210 Rottweil(DE)**

(72) Erfinder: **Schubert, Christoph**
**Durschstrasse 37**
**W-7210 Rottweil(DE)**

## Beschreibung

Die Erfindung bezieht sich auf eine Anlage zur Verhinderung von Kalkablagerungen in wasserdurchflossenen Rohreleitungssystemen, bei der das magnetische Prinzip Anwendung finden soll. Hierbei wird in dem Rohrleitungssystem ein Magnetfeld erzeugt, das dazu führt, dass die Ionen des Kalziumkarbonates ihre Hafteigenschaften verlieren und dadurch keine die Leitungen versetzenden Zusammenballungen mehr entstehen. Das Wasser wird wirksam enthärtet.

Bei den bekannten Anlagen dieser Art handelt es sich um solche, die in die Rohrleitungssysteme so eingebaut werden, dass ein Teil des Rohrsystems herausgeschnitten wird und statt dessen die Kalkumwandlungsanlage eingebaut wird. Bei der Installation der Anlagen muss also die bestehende Wasserinstallation unterbrochen werden, so dass bakterielle Schädigungen des Wassers eintreten können. Ganz davon abgesehen ist die Montage der Anlage dann selbstverständlich auch mit erheblichem Aufwand verbunden.

Der Erfindung liegt die Aufgabe zugrunde, die aufgezeigten Nachteile zu beseitigen und die magnetische Anlage und ihre vereinfachte Montageform zu schützen. Erfindungsgemäss soll die Anlage zur Verhinderung von Kalkablagerungen in Rohrleitungen, bei der durch ein äusserlich angelegtes Magnetfeld Kalkionen so beeinflusst werden, dass sie ihre Hafteigenschaft verlieren, dadurch gekennzeichnet sein, dass eine Mehrzahl von Magnetsystemen mit einer bogenartigen Form und mit zueinander gerichteten Polen, wobei diese Pole sich jeweils auf den rechteckigen Enden der Bögen befinden, so ausgebildet sind, dass sie ein gewähltes Teil des Rohrleitungssystems eng anliegend umschliessen und sich dabei nur durch ihre Magnetpole in ihrer gegenseitigen Lage halten.

Die erfindungsgemässe Montage wirkt jeglicher Wasserverunreinigung entgegen, da die Wasserrohrinstallationen nicht unterbrochen werden müssen. Auch kann die Montage der Anlage ganz ohne Zuhilfenahme von Werkzeugen erfolgen. Die Auswahl der Funktionsstelle der Kalkumwandlungsanlage kann am Wasserkreislauf frei gewählt werden. Es darf jedoch im Bereich der Kalkumwandlungsanlage keine Eisenrohrinstallation vorhanden sein, da das Eisenrohr ein Eindringen des Magnetfeldes in das Innere des Rohrleitungssystems verhindert. Der Funktionsbereich muss aus Kupferrohr oder aus PVC-Rohr bestehen. Sie kann auch im Bereich der aus Messing bestehenden Wasseruhr angebracht werden.

Gegenüber den bekannten Wasserenthärtungsverfahren, die nach dem Ionenaustauscherprinzip arbeiten, besteht der Vorteil, dass die Umwelt nicht mit Regeniersalz belastet wird, auf scharfe Reinigungsmittel verzichtet werden kann und der Preis Anlage einschliesslich ihrer Montage angemessen ist.

Gemäss der weiteren Erfindung können die erfindungsgemässen Magnetsysteme sowohl permanent- als auch elektromagnetischer Art sein, wobei die permanentmagnetischen Systeme den Vorteil haben, dass kein ständiger Stromverbrauch stattfindet, so dass sie sowohl in ihrer Montage einfacher als auch im Betriebe preisgünstiger sind.

Gemäss der weiteren Erfindung werden die Magnetsysteme als aus weichmagnetischem Material bestehende Halbschalen ausgebildet, in denen je ein gegenläufig polarisierter Permanentmagnet eingebettet ist.

Weitere Einzelheiten der erfindungsgemässen Anlage ergeben sich anhand einer Beschreibung der beiliegenden Zeichnungen. Es zeigt

Fig.1 die Anlage perspektivisch im aufgeklappten Zustand,

Fig.2 die fertig montierte Anlage

Fig.3 eine zu Fig.1 äquivalente Anlage unter Anwendung des elektromagnetischen Prinzips.

Fig.4 ist ein Querschnitt durch die Halbschalen gemäss Fig. 3

Fig.5 ist eine Gesamtansicht der Fig. 3

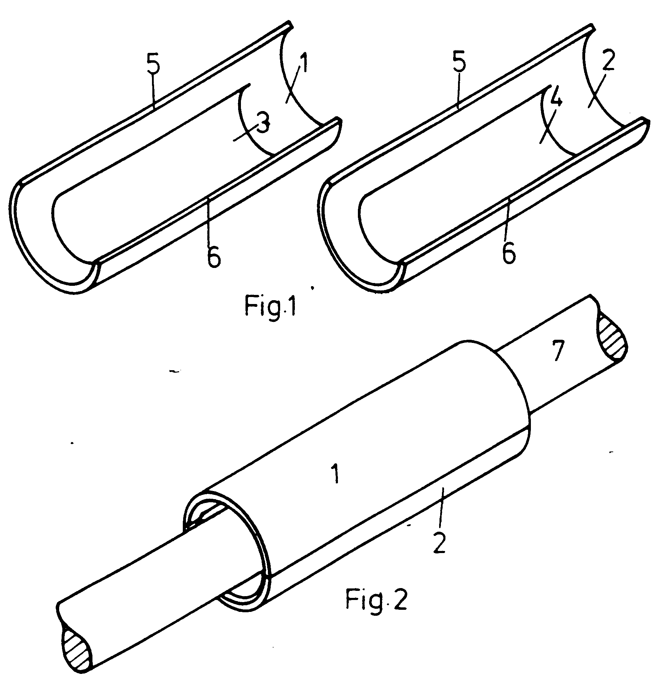

In zwei Halbschalen 1 und 2 aus weichmagnetischem Material sind Permanentmagnete 3 und 4 eingeklebt, die gegenläufig polarisiert sind. Dadurch entstehen an den Kanten 5 und 6 der Halbschalen 1 und 2 sich gegenseitig anziehende Pole. Legt man die beiden Halbschalen 1 und 2 um ein Wasserrohr 7 herum aufeinander, wie dies die Fig.2 zeigt, so halten sie sich ohne weitere Haltemittel und ohne Montagewerkzeuge in ihrer gegenseitigen Lage. Der lichte Durchmesser der aus den Halbschalen gebildeten Magnetsysteme ist dabei so gewählt, das die Permanentmagnete 3 und 4 jeweils im wesentlichen eng an dem Rohr 7 anliegen. Je enger die Magnete 3 und 4 an dem Rohr 7 anliegen umso günstiger ist selbstverständlich die Wirksamkeit der Anlage.

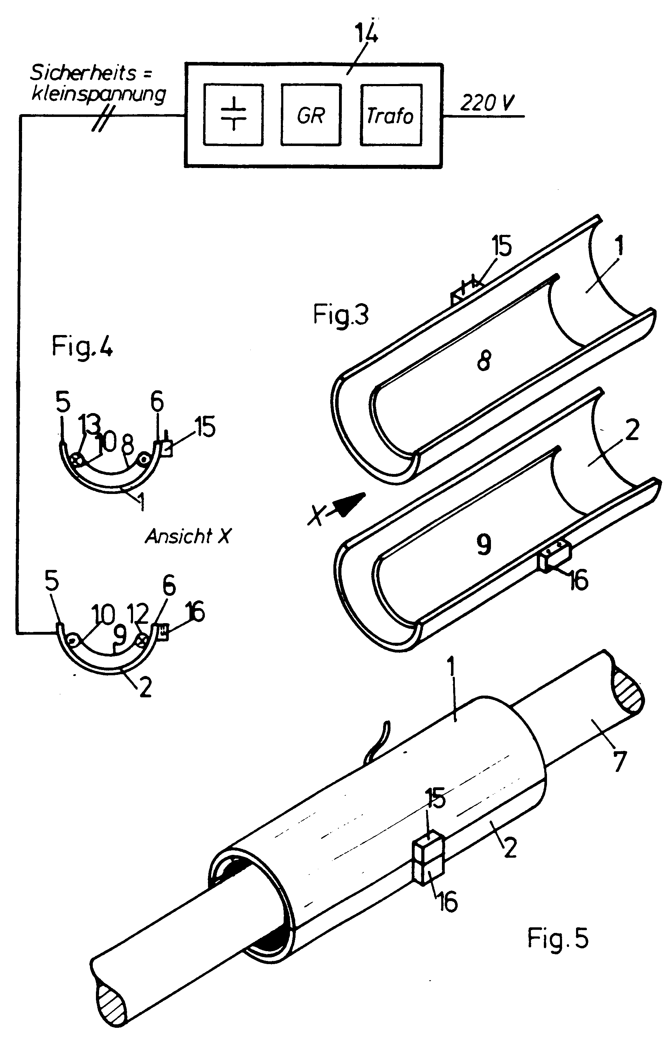

Die Anlage gemäss den Fig. 3 und 4 arbeitet auf dem elektromagnetischen Prinzip. Es sind die gleichen Halbschalen 1 und 2 als Magnetsysteme vorhanden, die ebenfalls aus weichmagnetischem Material hergestellt sind. Polstücke 8 und 9 sind an den Halbschalen 1 und 2 befestigt. Die Polstücke sind mit Aushöhlungen an ihren Begrenzungsflächen 10 versehen, um die Wicklungen 12 und 13 herumgewickelt sind. Die Wicklungen 12 und 13 sind dabei im elektrischen Kreislauf gegenläufig stromdurchflossen, so dass wiederum an den Kanten 5 und 6 der Halbschalen 1 und 2 gegenläufige Pole entstehen, mit denen sich diese im montierten Zustande um das Wasserrohr 7 herum in ihrer gegenseitigen Lage halten. Das Stromversorgungssystem 14 versorgt die Wicklungen 12 und 13 mit Strom, der über Stecker 15 und 16 an den Halbschalen 1 und 24 zugeführt wird. Durch das Stromversorgungssystem wird der zugeführt Wechselstrom über einen Transformator und einen Gleichrichter in Gleichstrom umgewandelt.

## Patentansprüche

1. Anlage zur Verhinderung von Kalkablagerungen in Rohrleitungen, bei der durch ein äusserlich angelegtes Magnetfeld Kalkionen so beeinflusst werden, dass sie ihre Hafteigenschaften verlieren, dadurch gekennzeichnet, dass eine Mehrzahl von Magnetsystemen mit einer bogenartigen Form und mit zueinander gerichteten Polen, wobei diese Pole sich jeweils auf den rechteckigen Enden der Bögen befinden, so ausgebildet sind, dass sie ein gewähltes Teil des Rohrleitungssystems eng anliegend umschliessen und sich dabei nur durch ihre Magnetpole in ihrer gegenseitigen Lage halten.

2. Anlage nach Anspruch 1, dadurch gekennzeichnet, dass die Magnetsysteme aus Permanentmagneten (3,4) gebildet sind.

3. Anlage nach Anspruch 1,dadurch gekennzeichnet, dass die Magnetsysteme aus Elektromagneten (8,9,12) gebildet sind.

4. Anlage nach Anspruch 2, dadurch gekennzeichnet, dass die Magnetsysteme als aus weichmagnetischem Material bestehende Halbschalen (1,2) ausgebildet sind, in denen je ein gegenläufig polarisierter Permanentmagnet (3,4) eingebettet ist.

5. Anlage nach Anspruch 4, dadurch gekennzeichnet, dass die Halbschalen (1,2) und die darin befindlichen Permanentmagnete (3,4) einen lichten Durchmesser haben, der im wesentlichen dem äusseren Durchmesser des damit zu umgebenden Rohrsystems entspricht.

6. Anlage nach Anspruch 4, dadurch gekennzeichnet, dass der Permanentmagnet nicht die ganze Innenfläche der damit auszustattenden Halbschalen (1,2) bedeckt, so dass einander zugekehrte Polflächen (5,6) an den Halbschalen entstehen.

## Claims

1. Device for avoiding limestone sediments in piping systems in which by an externally applied magnetic field calcium ions are influenced so that they lose their sticking qualities, characterized in that a plurality of magnetic systems of arc shape and with poles directed towards each other, such poles being arranged on the rectangular ends of the arcs, are so arranged that they tightly surround a chosen part of the piping system and keep themselves in their reciprocal position only by their magnetic poles.

2. Device according to claim 1, characterized in that the magnetic systems are permanent magnets (3, 4).

3. Device according tro claim 1, characterized in that the magnetic systems are electromagnets (8, 9, 12).

4. Device according to claim 2, characterized in that the magnetic systems consist of semicircular parts (1, 2) of soft magnetic material in which there are arranged oppositely polarized permanent magnets (3, 4).

5. Device according to claim 4, characterized in that the semicircular parts (1, 2) and the permanent magnets (3, 4) arranged therein have a clear diameter which corresponds essentially to the external diameter of the piping system which they surround.

6. Device according to claim 4, characterized in that the permanent magnet does not cover the whole internal surface of the semicircular parts (1, 2), so that pole surfaces (5, 6) result at the semicircular parts.

## Revendications

1. Installation destinée à empêcher les dépôts calcaires dans des canalisations dans laquelle les ions de calcaire subissent, par un champ magnétique appliqué à l'extérieur, une action telle qu'ils perdent leurs propriétés d'adhérence, caractérisée par le fait que plusieurs systèmes magnétiques d'une configuration arciforme et avec des pôles dirigés les uns vers les autres, lesdits pôles étant respectivement disposés sur les coins rectangulaires des arcs, sont réalisés de telle sorte qu'ils enveloppent étroitement un segment choisi du système de canalisation et qu'ils ne se maintiennent en même temps, dans leur position réciproque que grâce à leurs pôles magnétiques.

2.   Installation selon la revendication 1, caractérisée par le fait que les systèmes magnétiques sont constitués d'aimants permanents (3, 4).

3.   Installation selon la revendication 1, caractérisée par le fait que les systèmes magnétiques sont constitués d'électro-aimants (8, 9, 12).

4.   Installation selon la revendication 2, caracterisée par le fait que les systèmes magnétiques sont réalisés sous forme de demi-coquilles (1, 2) constituées d'un matériau de coercivité basse dans lesquelles est enrobé respectivement un aimant permanent (3, 4) de polarisation opposée.

5.   Installation selon la revendication 4, caracterisée par le fait, que les demi-coquilles (1, 2) et les aimants permanents (3, 4) qui y sont contenus ont un diamètre intérieur qui correspond, pour l'essentiel, au diamètre extérieur du système de canalisation qu'ils doivent envelopper.

6.   Installation selon la revendication 4, caractérisée par le fait que l'aimant permanent ne recouvre pas la surface intérieure entière des demi-coquilles (1, 2) à équiper, de sorte à donner naissance, sur lesdites demi-coquilles, à des faces polaires (5, 6) dirigées l'une vers l'autre.

Fig.1

Fig.2

14

Sicherheits =
kleinspannung

GR  Trafo

220 V

Fig.3

15

1

8

2

9

X

16

Fig.4

5  13  10  8  6  15

1

Ansicht X

5  10  12  9  6  16

2

1

15

7

2

16

Fig.5